(19) Europäisches Patentamt / European Patent Office / Office européen des brevets

(11) **EP 2 881 614 A1**

(12) **EUROPEAN PATENT APPLICATION**
published in accordance with Art. 153(4) EPC

(43) Date of publication:
**10.06.2015 Bulletin 2015/24**

(21) Application number: **13827532.6**

(22) Date of filing: **02.08.2013**

(51) Int Cl.:
*F16F 9/34* *(2006.01)*    *F16F 9/32* *(2006.01)*

(86) International application number:
**PCT/JP2013/071007**

(87) International publication number:
**WO 2014/024798 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.08.2012 JP 2012173691**

(71) Applicant: **Kayaba Industry Co., Ltd.**
**Tokyo 105-6111 (JP)**

(72) Inventor: **TERAOKA, Takashi**
**Tokyo 105-6111 (JP)**

(74) Representative: **Grünecker Patent- und Rechtsanwälte**
**PartG mbB**
**Leopoldstraße 4**
**80802 München (DE)**

(54) **SHOCK ABSORBER**

(57)    A shock absorber including a cylinder, a piston, a piston rod, and a damping passage communicating an expansion-side chamber with a compression-side chamber, includes a pressure chamber formed by a cylindrical housing provided on the expansion-side chamber side of the piston rod from the piston and a piston holder to which the piston is mounted and which closes the opening of the housing, a free piston slidably inserted inside the housing and which divides the pressure chamber into an expansion-side pressure chamber communicating with the expansion-side chamber via an expansion-side channel and a compression-side pressure chamber communicating with the compression-side chamber via a compression-side channel, and a spring element that generates energizing force for restraining displacement of the free piston with respect to the pressure chamber.

FIG. 1

**Description**

TECHNICAL FIELD

The present invention relates to a shock absorber.

BACKGROUND ART

JP2008-215459A and JP2008-215460A disclose shock absorbers. These shock absorbers include a cylinder, a piston slidably inserted inside the cylinder and which divides the cylinder inside into an upper chamber and a lower chamber, a first channel provided in the piston and which communicates the upper chamber with the lower chamber, a second channel that opens from a tip of the piston rod to a side part and which communicates the upper chamber with the lower chamber, a housing including a pressure chamber that is connected in the middle of the second channel and which is attached to a tip of the piston rod, a free piston slidably inserted inside the pressure chamber and which divides the pressure chamber into one chamber and another chamber, and a coil spring that energizes the free piston. The one chamber inside the pressure chamber communicates with the lower chamber via the second channel, and the another chamber inside the pressure chamber communicates with the upper chamber via the second channel.

The pressure chamber is divided into one chamber and another chamber by the free piston, and thus the upper chamber and the lower chamber do not directly communicate with each other via the second channel. However, when the free piston moves the volume ratio between the one chamber and the another chamber changes, and the fluid inside the pressure chamber moves between the upper chamber and the lower chamber in accordance with the movement of the free piston. By this behavior, the shock absorber apparently behaves as though the upper chamber and the lower chamber are communicated with each other via the second channel.

Here, formula (1) is obtained when calculating a transfer function of a differential pressure P with respect to a flow rate Q, where P is a differential pressure between the upper chamber and the lower chamber during expansion and contraction of the shock absorber, Q is a flow rate of fluid flowing out from the upper chamber, C1 is a coefficient showing a relationship between the differential pressure P and the flow rate Q1 of the fluid that passes through the first channel, P1 is a pressure within the another chamber of the pressure chamber, C2 is a coefficient showing a relationship between a difference between the differential pressure P and the pressure P1 and a flow rate Q2 of fluid flowing into the another chamber of the pressure chamber from the upper chamber, P2 is a pressure within the one chamber of the pressure chamber, C3 is a coefficient showing a relationship between the pressure P2 and the flow rate Q2 of the fluid flowing out from the one chamber into the lower chamber, A is a cross sectional area that is a pressure receiving area of the free piston, X is a displacement of the free piston with respect to the pressure chamber, and K is a spring constant of the coil spring. In formula (1), s indicates Laplacian.

[Math. 1]

$$G(s) = \frac{P(s)}{Q(s)} = \frac{C1\{1 + A^2(C2 + C3)s/K\}}{1 + A^2(C1 + C2 + C3)s/K} \quad \cdots(1)$$

Furthermore, formula (2) is obtained upon substituting $j\omega$ into the Laplacian s in the transfer function shown in formula (1) and calculating an absolute value of a frequency transfer function G ($j\omega$).

[Math. 2]

$$\left|G(j\omega)\right| = \frac{C1\left[K^4 + K^2A^4\left\{2(C2 + C3)(C1 + C2 + C3) + C1^2\right\}\omega^2 + A^8(C2 + C3)^2(C1 + C2 + C3)^2\omega^4\right]^{\frac{1}{2}}}{K^2 + A^4(C1 + C2 + C3)^2\omega^2}$$

$$\cdots(2)$$

As understandable from the above formulae, the transfer function of the differential pressure P with respect to the flow rate Q in the shock absorber has a frequency characteristic such as one having two breakpoint frequencies of Fa = K / {2 · π · A² · (C1 + C2 + C3)} and Fb = K / {2 · π· A² · (C2 + C3)}. If frequency F is in a range of F < Fa, a transfer gain is substantially C1. If frequency F is in a range of Fa ≤ F ≤ Fb, the transfer gain is gradually reduced from C1 to C1 · (C2 + C3) / (C1 + C2 + C3). If the frequency F is in the range of F > Fb, the transfer gain is constant. That is to say, the transfer function of the differential pressure P with respect to the flow rate Q has a frequency characteristic in which the transfer gain increases in a low frequency range, and the transfer gain is reduced in a high frequency range.

This enables the shock absorber to generate a large damping force against an oscillatory input of a low frequency, and to generate a small damping force against an oscillatory input of a high frequency. Accordingly, a high damping force can be generated in a state in which an input oscillation frequency is low for example while the vehicle is rotating, and a low damping force can be generated in a state in which the input oscillation frequency is high for example when the vehicle is running on an uneven road surface, to improve comfortableness of the vehicle.

## SUMMARY OF INVENTION

The above shock absorber uses the housing for containing the free piston as a piston nut that is screwed onto the tip of the piston rod, to fix for example pistons and leaf valves to the tip of the piston rod. This thus makes a whole length of the piston to the housing long.

Thus, as compared to a shock absorber without the housing, a stroke length becomes shorter by the length the housing is disposed. Although attempt to secure the stroke length would cause the whole length of the shock absorber to extend long, which would deteriorate the mountability to a vehicle, an attempt to secure the mountability onto the vehicle would cause the stroke length to be insufficient. Therefore, difficulties exist in accommodating both of the stroke length and the mountability to the vehicle.

It is an object of the present invention to provide a shock absorber that can accommodate both of the securing the stroke length and the mountability to the vehicle.

According to one aspect of the present invention, a shock absorber includes a cylinder, a piston slidably inserted inside the cylinder and adapted to divide the cylinder inside into an expansion-side chamber and a compression-side chamber, a piston rod inserted movably inside the cylinder and connected to the piston, a damping passage communicating the expansion-side chamber with the compression-side chamber, a pressure chamber formed of a cylindrical housing provided on an expansion-side chamber side of the piston rod from the piston and a piston holder to which the piston is mounted and is adapted to close an opening of the housing, a free piston slidably inserted inside the housing and adapted to divide the pressure chamber inside into an expansion-side pressure chamber communicating with the expansion-side chamber via an expansion-side channel and a compression-side pressure chamber communicating with the compression-side chamber via a compression-side channel, and a spring element adapted to generate an energizing force to restrain displacement of the free piston with respect to the pressure chamber.

## BRIEF DESCRIPTION OF DRAWINGS

FIG. 1 is a vertical cross sectional view of a shock absorber in accordance with an embodiment of the present invention,

FIG. 2 is a view showing damping characteristics with respect to oscillation frequency of a shock absorber in accordance with an embodiment of the present invention, and

FIG. 3 is a vertical cross sectional view showing a modification of a shock absorber in accordance with an embodiment of the present invention.

## DESCRIPTION OF EMBODIMENTS

Hereinafter, embodiments of the present invention are described with reference to the accompanying drawings.

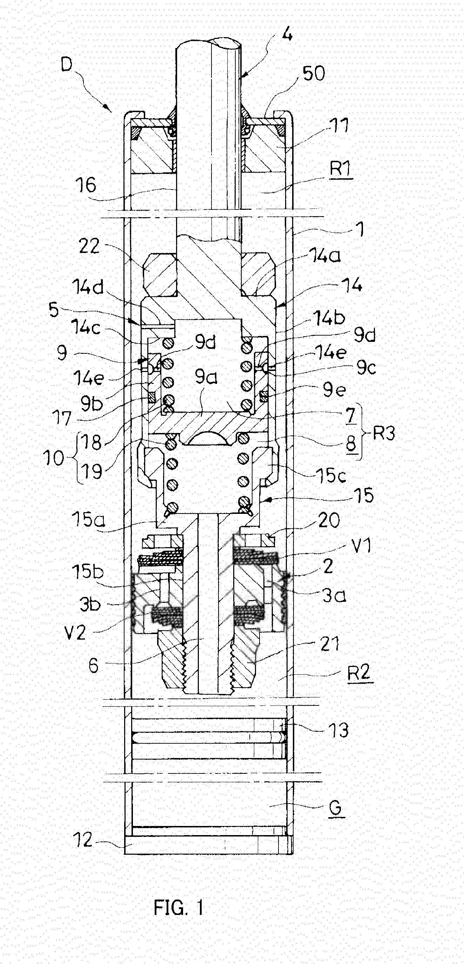

FIG. 1 is a vertical cross sectional view of a shock absorber in the present embodiment.

A shock absorber D includes a cylinder 1, a piston 2 slidably inserted inside a cylinder 1 and which divides the cylinder 1 inside into an expansion-side chamber R1 and a compression-side chamber R2, a piston rod 4 movably inserted inside the cylinder 1 and being connected to the piston 2, damping passages 3a and 3b that communicate the expansion-side chamber R1 with the compression-side chamber R2, a pressure chamber R3, a free piston 9 movably inserted inside the pressure chamber R3 and which divides the pressure chamber R3 into an expansion-side pressure chamber 7 that communicates with the expansion-side chamber R1 via an expansion-side channel 5 and a compression-side pressure chamber 8 that communicates with the compression-side chamber R2 via a compression-side channel 6, and a spring element 10 that generates an energizing force for preventing displacement of the free piston 9 with respect to the pressure chamber R3.

The shock absorber D is disposed between the body and axle of a vehicle and generates damping force to minimize oscillation of the body. The expansion-side chamber R1 is a chamber that is compressed when the body and the axle separate from each other and thus the shock absorber D operates in an expanding manner, and the compression-side chamber R2 is a chamber that is compressed when the body and the axle approach near each other and thus the shock absorber D operates in a contracting manner.

The cylinder 1 mounts a ring-shaped head member 11 on its upper end, and the cylinder 1 is closed with a cap 12 on its lower end. The piston rod 4 is slidably supported by the head member 11, and the piston rod 4 has its upper end project outwards of the cylinder 1. That is to say, the shock absorber D is a single rod type shock absorber.

The expansion-side chamber R1, the compression-side chamber R2, and the pressure chamber R3 are filled with a fluid such as hydraulic oil. The lower side in the cylinder 1 provides a sliding partition 13 that is slidably in contact with an inner circumference of the cylinder 1 and which divides a gas chamber G in a lower part of the compression-side chamber R2. The shock absorber D is a single cylinder type shock absorber that compensates the volume of the piston rod 4 entering and exiting the cylinder 1 by the expansion and contraction of the gas chamber G.

In the present embodiment, the volume of the piston rod 4 that moves forwards and backwards of the cylinder 1 is compensated by the gas chamber G; alternatively, a reservoir may be provided outside the cylinder 1. In this case, a multiple cylinder type shock absorber may be achieved in which an outer cylinder that covers the outer circumference of the cylinder 1 is provided and a reservoir is formed between the cylinder 1 and the outer cylinder, or a tank may be provided separately to the cylinder 1 and this tank may serve as the reservoir. Moreover, in a case in which the volume compensation is performed by the reservoir, the shock absorber may also have a partition member for partitioning the compression-side chamber R2 from the reservoir to increase the pressure of the compression-side chamber R2 during the contraction operation of the shock absorber D, and a base valve provided on the partition member and which imparts resistance to the flow of fluid from the compression-side chamber R2 to the reservoir.

The fluid filled inside the expansion-side chamber R1, the compression-side chamber R2 and the pressure chamber R3, each of which serve as operation chambers, is not limited to the hydraulic oil, and may be a fluid such as water or aqueous solution. Moreover, the shock absorber D may be not the single rod type but a double rod type.

The piston 2 is connected to a lower end in FIG. 1 of the piston rod 4 that is movably inserted through the cylinder 1, via the housing 14 and piston holder 15 that form the pressure chamber R3. The piston 2 is slidably in contact with the inner circumference of the cylinder 1, and divides the cylinder 1 inside into the expansion-side chamber R1 and the compression-side chamber R2.

The piston rod 4 is inserted inside the head member 11 attached on the upper end in FIG. 1 of the cylinder 1, and an upper part of the piston rod 4 is projected outwards. A space between the piston rod 4 and the cylinder 1 is sealed by a ring-shaped sealing member 50 stacked on the head member 11, and inside the cylinder 1 is maintained in a liquid-tight state. The volume of the piston rod 4 that enters and exits the cylinder 1 in response to the expansion and contraction of the shock absorber D is compensated by the movement of the sliding partition 13 in a vertical direction in FIG. 1 as a result of the expansion or contraction of the volume of gas inside the gas chamber G.

The piston rod 4 has a piston rod body 16, and a cylindrical housing 14 of a large diameter disposed on a lower end in FIG. 1 of the piston rod body 16. A piston holder 15 is fitted to an opening on the lower end in FIG. 1 of the housing 14, to hold the piston 2. The piston holder 15 is fixed to the opened end of the housing 14 by caulking the lower opened end of the housing 14 inwards. In the present embodiment, the housing 14 is formed on the tip of the piston rod 4 and is integrated with the piston rod 4, however the housing 14 may be provided as a part separate from the piston rod 4 and may be assembled to the piston rod 4 to integrate the two together.

The housing 14 has a flange portion 14a provided on a lower end of the piston rod body 16, a cylindrical portion 14b suspended down from the flange portion 14a, a stepped portion 14c at which an inner diameter on an upper side of the cylindrical portion 14b is made small, a through hole 14d opened from the outer circumference of the cylindrical portion 14b to the inner circumference of the stepped portion 14c also being an inner circumference of the cylindrical portion 14b and which communicates the expansion-side chamber R1 with the pressure chamber R3, and an opening hole 14e opening from the outer circumference of the cylindrical portion 14b to the inner circumference of the cylindrical portion 14b at a lower side of the stepped portion 14c also being an inner circumference of the cylindrical portion 14b and which communicates the expansion-side chamber R1 with the pressure chamber R3. On a shoulder of the housing 14, which is an upper edge of the flange portion 14a of the housing 14, a ring-shaped full extension stopper 22 is stacked, mounted on the outer circumference of the piston rod body 16 and made of an elastic body.

The piston holder 15 has a disk part 15a, a shaft 15b suspending down from a lower end of the disk part 15a, a cylindrical socket 15c that stands upright from the outer circumference of the disk part 15a and fits with the lower end in FIG. 1 of the cylindrical portion 14b of the housing 14, and a compression-side channel 6 opened towards the pressure chamber R3 at a tip of the shaft 15b. The piston holder 15 fits with the disk part 15a at the lower end inner circumference of the cylindrical portion 14b of the housing 14, and is fixed to the housing 14 by caulking the lower end of the cylindrical portion 14b towards the inner circumferential side. Once the piston holder 15 is fixed to the housing 14, the pressure chamber R3 divided from the expansion-side chamber R1 is formed inside the housing 14.

The pressure chamber R3 is divided inside into the expansion-side pressure chamber 7 and the compression-side pressure chamber 8 by the free piston 9 that is slidably inserted inside the housing 14. The free piston 9 is of a bottomed cylinder shape, and is slidably inserted inside the housing 14 having the bottom portion 9a facing towards the lower side in FIG. 1. The outer circumference of the cylindrical portion 9b of the free piston 9 is slidably in contact with the inner circumference of the cylindrical portion 14b in the housing 14.

Since the free piston 9 is contained in the housing 14 with the bottom portion 9a facing downwards in FIG. 1, even in any event of air bubbles generating inside the expansion-side pressure chamber 7 or air bubbles remaining in the expansion-side pressure chamber 7 at the time of assembly of the shock absorber D, it is possible to prevent the air bubbles from remaining inside the free piston 9 and not being able to be released outside. This thus stabilizes the characteristics of the damping force of the shock absorber D. It is also possible to contain the free piston 9 inside the housing 14 with the bottom portion 9a facing the upwards direction in FIG. 1.

The free piston 9 has a ring-shaped groove 9c provided on the outer circumference of the cylindrical portion 9b, a hole 9d leading from the inner circumference of the cylindrical portion 9b of the free piston 9 to the ring-shaped groove 9c, and a ring-shaped seal wearing groove 9e provided on a lower side in FIG. 1 of the ring-shaped groove 9c of the cylindrical portion 9b. The seal wearing groove 9e wears a seal ring 17 that is slidably in contact with the inner circumference of the cylindrical portion 14b of the housing 14 and which seals a space between the free piston 9 and the housing 14.

The pressure chamber R3 is provided with a spring element 10 that generates energizing force for minimizing displacement of the free piston 9. The spring element 10 includes an expansion-side coil spring 18 disposed inside the expansion-side pressure chamber 7 and between the flange portion 14a and the bottom portion 9a of the free piston 9, and a compression-side coil spring 19 disposed inside the compression-side pressure chamber 8 and between the disk part 15a of the piston holder 15 and the bottom portion 9a of the free piston 9. The free piston 9 is sandwiched from its upper and lower sides by the spring element 10 composed of the expansion-side coil spring 18 and the compression-side coil spring 19, is determined in position at a predetermined neutral position inside the pressure chamber R3, and is elastically supported.

The neutral position does not mean in the middle of the shaft direction of the pressure chamber R3, but a position of the free piston 9 determined by the spring element 10. Moreover, the spring element 10 may employ a structure other than the coil spring, for example a plate spring, as long as it is a structure that can elastically support the free piston 9. Furthermore, the spring element 10 may be configured by using a single elastic body whose one end is connected to the free piston 9.

When the free piston 9 is in the neutral position, the ring-shaped groove 9c faces the opening hole 14e opened in the cylindrical portion 14b of the housing 14. This allows for the expansion-side chamber R1 and the expansion-side pressure chamber 7 to communicate with each other via the through hole 14d, and communicate with each other via the opening hole 14e, ring-shaped groove 9c and hole 9d. When the free piston 9 is displaced to the stroke end, that is, when it is displaced until the upper end in FIG. 1 of the cylindrical portion 9b of the free piston 9 comes into contact with the stepped portion 14c provided on the inner circumference of the housing 14 or until the lower end in FIG. 1 of the bottom portion 9a of the free piston 9 comes into contact with the upper end of the socket 15c of the piston holder 15, the opening hole 14e becomes completely closed by the outer circumference of the free piston 9.

That is to say, the expansion-side channel 5 is constituted of the through hole 14d, the opening hole 14e, the ring-shaped groove 9c and the hole 9d. The through hole 14d constituting one part of the expansion-side channel 5 forms an orifice channel in which a channel area varies in accordance with the displacement of the free piston 9 with respect to the housing 14. The through hole 14d is set as a channel area possible to provide a resistance to the flow of fluid passing through, and functions as a fixed orifice.

When the free piston 9 is in neutral position, all of the opened ends of the opening holes 14e that are the orifice channels face the ring-shaped groove 9c. When the free piston 9 is displaced from the neutral position and the degree of displacement is of a predetermined degree of displacement, the opened ends of the opening holes 14e start to face the outer circumference of the free piston 9. Thereafter, the channel area of the opening holes 14e gradually decreases in accordance with the displacement of the free piston 9, and the channel resistance in the expansion-side channel 5 gradually increases. When the free piston 9 reaches the stroke end, the opening holes 14e are completely closed by the outer circumference of the free piston 9, and the channel resistance in the expansion-side channel 5 is maximized. In this case, the expansion-side pressure chamber 7 communicates with the expansion-side chamber R1 just through the through hole 14d.

Instead of the opening holes 14e, the ring-shaped groove 9c and the hole 9d, opening holes that communicate the inside of the cylindrical portion 9b of the free piston 9 with the outside thereof, a ring-shaped groove formed on the inner circumference of the housing 14, and a hole communicating the ring-shaped groove with the expansion-side chamber R1 may be provided. In this case, when the free piston 9 is displaced to the stroke end, the opening hole functioning as the orifice channel provided on the free piston 9 is closed by the cylindrical portion 14b of the housing 14.

When the free piston 9 is inserted into the housing 14, the free piston 9 is inserted into the housing 14 from the cylindrical portion 9b side. The seal ring 17 will not pass the opening hole 14e provided in the housing 14, and thus the opening hole 14e will not interfere with the seal ring 17 even if the free piston 9 is stroked inside the housing 14. That is to say, the mounted position of the seal ring 17 on the free piston 9 is at a position not passing over the opening hole 14e when the free piston 9 is inserted inside the housing 14. This allows for preventing the seal ring 17 from becoming damaged by interference with the opening hole 14e, and thus can exhibit good sealing ability. The compression-side channel 6 provided on the piston holder 15 has no choke or valve that serves as resistance, however a choke or a valve can be provided.

When the free piston 9 compresses the expansion-side pressure chamber 7 the most, the free piston 9 is restricted in movement by the stepped portion 14c of the housing 14. Accordingly, the through hole 14d is closed by the free piston 9, and the expansion-side channel 5 will not be blocked. When the stepped portion 14c is omitted and the free piston 9 reaches the stroke end on the upper side in FIG. 1, the through hole 14d can be closed by the free piston 9. In this case, when the free piston 9 reaches the stroke end, the expansion-side channel 5 is completely blocked and the expansion-side pressure chamber 7 is closed. This thus prevents the free piston 9 from colliding with the housing 14 by the effect of fluid pressure lock, and prevents generation of a collision noise.

The piston 2 is formed as a ring shape, and is mounted on the outer circumference of the shaft 15b provided on the piston holder 15. The piston 2 is provided with the damping passages 3a and 3b that communicate the expansion-side chamber R1 with the compression-side chamber R2. The upper end in FIG. 1 of the damping passage 3a is closed by a stacked leaf valve V1 stacked upper in FIG. 1 of the piston 2 as a damping force generating element. The lower end in FIG. 1 of the damping passage 3b is closed by a stacked leaf valve V2 stacked lower in FIG. 1 of the piston 2 as a damping force generating element.

The stacked leaf valves V1 and V2 are formed in a ring shape, and on the inner circumferential sides thereof, the shaft 15b is inserted. The stacked leaf valves V1 and V2 are stacked on the piston 2 together with a ring-shaped valve stopper 20 that controls a deflection amount of the stacked leaf valve V1.

The stacked leaf valve V1 opens by deflection caused by a differential pressure between the compression-side chamber R2 and the expansion-side chamber R1 during the contraction operation of the shock absorber D, which thus opens the damping passage 3a and provides resistance on the flow of fluid flowing from the compression-side chamber R2 to the expansion-side chamber R1, and closes the damping passage 3a during the expansion operation of the shock absorber D. The stacked leaf valve V2 opens by deflection caused by a differential pressure between the compression-side chamber R2 and the expansion-side chamber R1 during the expansion operation of the shock absorber D, which thus opens the damping passage 3b and provides resistance on the flow of fluid flowing from the expansion-side chamber R1 to the compression-side chamber R2, and closes the damping passage 3b during the contraction operation. That is to say, the stacked leaf valve V1 is a damping force generating element that generates compression-side damping force during the contraction operation of the shock absorber D, and the stacked leaf valve V2 is a damping force generating element that generates expansion-side damping force during the expansion operation of the shock absorber D.

Even if the damping passages 3a and 3b are in closed states by the stacked leaf valves V1 and V2, the expansion-side chamber R1 and the compression-side chamber R2 are communicated with each other by a well-known orifice. The orifice is formed, for example, by providing a notch to the outer circumference of the stacked leaf valves V1 and V2 or by providing a depression on a base on which the stacked leaf valves V1 and V2 sit. As the damping force generating element, a structure other than the stacked leaf valves V1 and V2, for example a structure of arranging a chalk and a leaf valve in a parallel manner may be employed.

The shaft 15b of the piston holder 15 assembles the valve stopper 20, the stacked leaf valve V1, the piston 2, and the stacked leaf valve V2 in this order, and the piston nut 21 is screwed on from the lower side of the stacked leaf valve V2. The piston 2, the stacked leaf valves V1 and V2 and the valve stopper 20 are fixed to the piston holder 15 by the piston nut 21.

Next describes the operation of the shock absorber D.

First described is an operation in the shock absorber D in a case in which the displacement degree from the neutral position in the free piston 9 is within a range that does not start closing the opening hole 14e, that is, the orifice channel.

In this case, the free piston 9 can be displaced without changing the resistance of the expansion-side channel 5. In the following description, an assumption is made that piston speeds are the same in a case in which the oscillation frequency inputted into the shock absorber D is low and a case in which the oscillation frequency is high.

When the input frequency into the shock absorber D is low, an amplitude of the oscillation inputted becomes large, and an amplitude of the free piston 9 also increases within a range in which the opening hole 14e does not start to close. When the amplitude of the free piston 9 increases within the above range, the energizing force received by the free piston 9 from the spring element 10 increases, which spring element 10 is constituted of the expansion-side coil spring 18 and the compression-side coil spring 19. When the shock absorber D expands, the pressure within the compression-side pressure chamber 8 decreases by the amount of the energizing force of the spring element 10, as compared to the pressure of the expansion-side pressure chamber 7. When the shock absorber D contracts, the pressure inside the expansion-side pressure chamber 7 decreases by the amount of the energizing force of the spring element 10, as compared to the pressure inside the compression-side pressure chamber 8.

As such, when the shock absorber D receives a low frequency oscillation, a differential pressure corresponding to the energizing force of the spring element 10 generates on the expansion-side pressure chamber 7 and the compression-side pressure chamber 8, thus causing a decrease in the differential pressure between the expansion-side chamber R1 and the expansion-side pressure chamber 7 and the differential pressure between the compression-side chamber R2 and the compression-side pressure chamber 8. As a result, the flow rate flowing through an apparent channel constituted of the expansion-side channel 5, the compression-side channel 6, the expansion-side pressure chamber 7 and the compression-side pressure chamber 8 becomes small. Since the flow rate that passes through the apparent channel is low, the flow rate of the damping passages 3a and 3b increases, thus allowing for the damping force generated at the shock absorber D to be maintained high.

When the input frequency into the shock absorber D is high, the amplitude of the inputted oscillation decreases, and the amplitude of the free piston 9 becomes lower. If the amplitude of the free piston 9 becomes low, the energizing force received by the free piston 9 from the spring element 10 becomes small. Whether the shock absorber D is in the expansion step or in the contraction step, the pressure within the expansion-side pressure chamber 7 and the pressure within the compression-side pressure chamber 8 are substantially equal. Therefore, since the differential pressure between the expansion-side chamber R1 and the expansion-side pressure chamber 7 and the differential pressure between the compression-side chamber R2 and the compression-side pressure chamber 8 increase, the flow rate passing through the apparent channel constituted of the expansion-side channel 5, compression-side channel 6, expansion-side pressure chamber 7 and compression-side pressure chamber 8 increases.

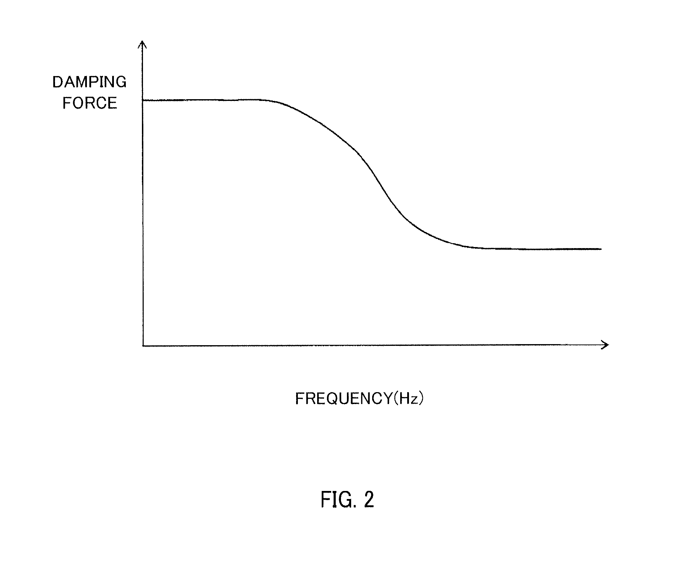

When the frequency of the oscillation to be inputted into the shock absorber D is low, the flow rate passing through the apparent channel is small, and when the frequency is high, the flow rate passing through the apparent channel becomes great. If the input rate is the same, the flow rate flowing from the expansion-side chamber R1 to the compression-side chamber R2 or from the compression-side chamber R2 to the expansion-side chamber R1 become equal regardless of the input frequency. Therefore, when the input frequency is low, the flow rate passing through the stacked leaf valves V1 and V2 of the damping passages 3a and 3b increases, thereby increasing the damping force, and when the input frequency is high, the flow rate passing through the stacked leaf valves V1 and V2 of the damping passages 3a and 3b decreases, thereby decreasing the damping force. Accordingly, the damping characteristics of the shock absorber D, as shown in FIG. 2, become a characteristic in that as the frequency increases the damping force decreases.

The shock absorber D of the present embodiment can modify the damping force in response to the input oscillation frequency. This allows for generating a high damping force with respect to an input of an oscillation of a resonance frequency above the spring to stabilize the posture of the vehicle, to be able to prevent the passenger from feeling concern when the vehicle is turning. Furthermore, if an oscillation of a resonance frequency below the spring is inputted a low, damping force is generated and thus minimizes propagation of the oscillation on the axle side to the body side, this thus allows for improving the comfortableness of the vehicle.

Next described is an operation of the shock absorber D in a case in which the degree of displacement from a neutral position of the free piston 9 is within a range that causes an increase in the channel resistance of the expansion-side channel 5.

In this case, in either case of the shock absorber D expanding or contracting, the closed amount of the opening hole 14e increases in accordance with the increase in the degree of displacement from the neutral position of the free piston 9, and the channel area of the expansion-side channel 5 gradually decreases. Thereafter, when the free piston 9 reaches one of the upper and lower stroke ends, the opening hole 14e completely closes, and the channel area of the expansion-side channel 5 becomes limited to the channel area of the through hole 14d that functions as a fixed orifice and is minimized.

That is to say, after the free piston 9 starts to close the opening hole 14e, the channel resistance of the expansion-side channel 5 gradually increases in response to the degree of displacement of the free piston 9 and is maximized when the free piston 9 reaches the stroke end. Here, the free piston 9 is displaced to the stroke end when the amount of the fluid flowing in and out of the expansion-side pressure chamber 7 or the compression-side pressure chamber 8, more specifically, when the amplitude of the expansion and contraction of the shock absorber D is large.

When the oscillation frequency inputted into the shock absorber D is relatively high, the channel resistance of the expansion-side channel 5 gradually increases as the closed amount of the opening hole 14e by the free piston 9 increases. This causes a decrease in the stroke speed of the free piston 9 further more towards the stroke end side, and the amount of fluid transfer via the apparent channel also decreases. The amount of fluid passing through the damping passages 3a and 3b increases by the decreased amount of fluid flowing via the apparent channel, and thus the generated damping force of the shock absorber D gradually increases.

Thereafter, when the free piston 9 reaches the stroke end, no fluid flows via the apparent channel. Therefore, the fluid flows only through the damping passages 3a and 3b until the expansion and contraction direction of the shock absorber D is reversed, and thus the attenuation coefficient of the generated damping force of the shock absorber D is maximized.

As such, the shock absorber D gradually increases the generated damping force from after the degree of displacement from the neutral position of the free piston 9 exceeds an arbitrary displacement degree to until the free piston 9 reaches the stroke end. Therefore, even if an oscillation of a large amplitude is inputted to the shock absorber D at a high frequency that may cause a displacement of the free piston 9 to the stroke end, it is possible to prevent the damping force of the shock absorber D from suddenly increasing. That is to say, the change in damping force from the low damping force generated when the free piston 9 reaches the stroke end to the high damping force is made gradually. The shock absorber D gradually increases the generated damping force until the free piston 9 reaches the stroke end of both sides in the pressure chamber R3. This prevents a sudden change in the damping force in both steps of the expansion pressure of the shock absorber D.

The shock absorber D gradually changes the generated damping force even if an oscillation having a large amplitude is inputted at a high frequency. This thus prevents the transmission of shock caused by the change in damping force to the passenger, thereby improving the comfortableness of the vehicle. The shock absorber D further prevents the hood from resonating and generating an abnormal sound by the oscillation of the body resulting from a sudden change in the damping force.

In the shock absorber D, the piston rod 4 is supported by the head member 11, and by the piston 2 connected to the tip of the piston rod 4 being slidably in contact with the cylinder 1, the shock absorber D receives force from a transverse direction (transverse force) by the head member 11 and the piston 2. Therefore, from the necessity of securing a certain fitting length with the head member 11 and the piston 2, the full extension stopper 22 comes into contact with the head member 11 and regulates further expansion of the shock absorber D. A fully extended position of the full extension stopper 22 is set capable of securing a minimum required fitting length with the piston 2 and the head member 11, and the length between the full extension stopper 22 and the piston 2 does not contribute to the stroke length of the shock absorber D.

The pressure chamber R3 is formed by the cylindrical housing 14 disposed on the piston rod 4 and in which the free piston 9 is slidably inserted and the piston holder 15 on which the piston 2 is mounted and which closes the opening of the housing 14, and is disposed on an expansion-side chamber R1 side. Thus, by having the housing 14 and the piston holder 15 fitted within a range of the minimum required fitting length of the piston 2 and the head member 11, the pressure chamber R3 can be provided without affecting the stroke length of the shock absorber D, and can avoid the whole length of the shock absorber D from becoming long. As a result, both of the securing of the stroke length and the mountability to the vehicle can be achieved.

Furthermore, the housing 14 that forms the pressure chamber R3 is contained between the full extension stopper 22 and the piston 2. This allows for forming the pressure chamber R3 inside the cylinder 1 without sacrificing the stroke length of the shock absorber D, and avoids the whole length of the shock absorber D from becoming long.

Furthermore, the full extension stopper 22 is stacked on the shoulder of the housing 14, so therefore there is no need to provide a flange for fixing the full extension stopper 22 to the outer circumference of the piston rod 4. This allows for reducing the number of parts and cost, and the shock absorber D may be made lightweight.

The piston holder 15 includes on its outer circumference a shaft 15b on which the piston 2 is mounted, and the compression-side channel 6 is provided on the shaft 15b. This thus allows for providing the compression-side channel 6 in a reasonable manner.

The embodiments of the present invention described above are merely illustration of some application examples of the present invention and not of the nature to limit the technical scope of the present invention to the specific constructions of the above embodiments.

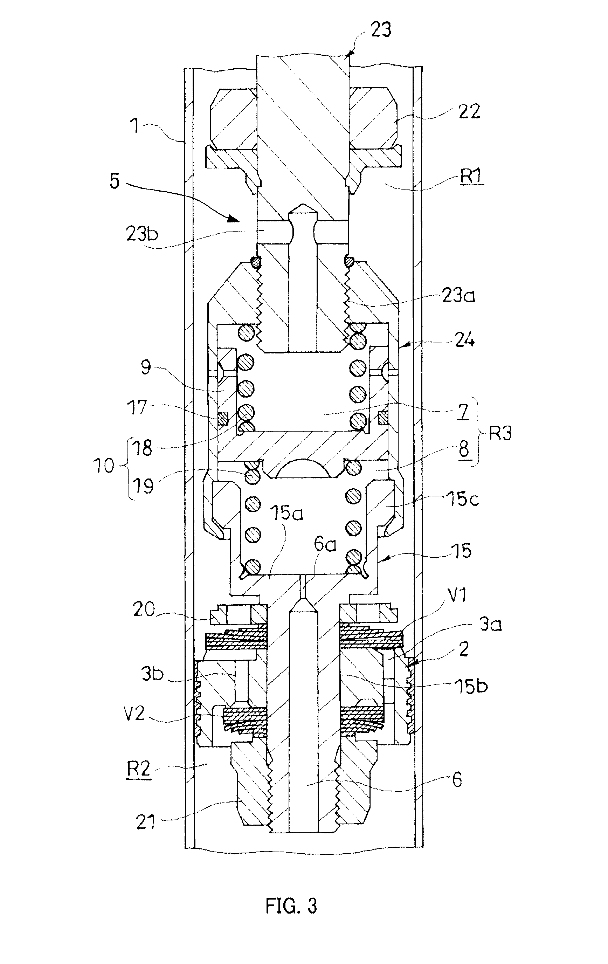

For example, in the present embodiment, the housing 14 is integrally formed on a tip of the piston rod body 16 of the piston rod 4. Alternatively, a screw portion 23a may be provided on the outer circumference of the lower end of the piston rod 23 as shown in FIG. 3, and the housing 24 can be provided on the piston rod 23 by screwing the cylindrical housing 24 to the screw portion 23a. Moreover, the fixing of the piston rod 23 and the housing 24 may be carried out by other methods not limited to the screw fastening, for example welding.

Furthermore, in FIG. 1 and FIG. 3, the piston holder 15 is integrated by caulking the lower side opened end of the housings 14 and 24, however these can be integrated by for example welding or screw fastening.

Furthermore, in the shock absorber D shown in FIG. 3, the expansion-side channel 5 is formed by a rod inner passage 23b that passes through from the tip of the piston rod 23 into the side direction, and a choke 6a is provided in the middle of the compression-side channel 6 provided to the piston holder 15. As such, by providing the choke 6a to the compression-side channel 6 instead of providing a choke to the expansion-side channel 5, air bubbles can be readily released from the expansion-side pressure chamber 7. However, a choke may also be provided on the expansion-side channel 5.

Furthermore, in the shock absorber D shown in FIG. 3, although an orifice channel is provided which allows the channel area to change in accordance with the displacement of the free piston 9 with respect to the housing 24, this providing of the orifice channel is optional.

Furthermore, the shape and structure of the housings 14 and 24 and the piston holder 15 are modifiable in design as appropriate, and are not limited to the above shapes and structures.

The present application claims a priority based on Japanese Patent Application No. 2012-173691 filed with the Japan Patent Office on August 6, 2012, all the contents of which are hereby incorporated by reference.

**Claims**

1. A shock absorber, comprising:

   a cylinder;
   a piston slidably inserted inside the cylinder and adapted to divide the cylinder inside into an expansion-side chamber and a compression-side chamber;
   a piston rod inserted movably inside the cylinder and connected to the piston;
   a damping passage communicating the expansion-side chamber with the compression-side chamber;
   a pressure chamber formed of a cylindrical housing provided on an expansion-side chamber side of the piston rod from the piston and a piston holder to which the piston is mounted and is adapted to close an opening of the housing;
   a free piston slidably inserted inside the housing and adapted to divide the pressure chamber inside into an expansion-side pressure chamber communicating with the expansion-side chamber via an expansion-side channel and a compression-side pressure chamber communicating with the compression-side chamber via a compression-side channel; and
   a spring element adapted to generate an energizing force to restrain displacement of the free piston with respect to the pressure chamber.

2. The shock absorber according to claim 1, further comprising
   a full extension stopper provided on an outer circumference of the piston rod and adapted to regulate withdrawal of the piston rod with respect to the cylinder, wherein
   the housing is provided on a tip side of the piston rod from the full extension stopper.

3. The shock absorber according to claim 2, wherein
   the full extension stopper is stacked on a shoulder of the housing.

4. The shock absorber according to claim 1, wherein
   the free piston is formed as a bottomed cylinder and is inserted inside the housing in a state where an opening thereof faces the expansion-side chamber side from the piston.

5. The shock absorber according to claim 1, wherein:

   the piston holder has a shaft to which the piston is mounted on an outer circumference thereof; and
   the compression-side channel penetrates through the shaft and is communicated with the inside of the housing.

6. The shock absorber according to claim 1, wherein
   the expansion-side channel has an orifice channel whose channel area changes by a displacement of the free piston with respect to the housing.

7. The shock absorber according to claim 6, wherein:

   the orifice channel has an opening hole that opens from a side part of the housing and which communicates with the inside of the housing;
   the free piston has a seal ring slidably in contact with an inner circumference of the housing and adapted to seal a part between the free piston and the housing; and
   the seal ring is mounted on a position that does not require passing by the opening hole when inserting the free piston into the housing.

FIG. 1

FIG. 2

FIG. 3

## INTERNATIONAL SEARCH REPORT

International application No.

PCT/JP2013/071007

### A. CLASSIFICATION OF SUBJECT MATTER
*F16F9/34*(2006.01)i, *F16F9/32*(2006.01)i

According to International Patent Classification (IPC) or to both national classification and IPC

### B. FIELDS SEARCHED

Minimum documentation searched (classification system followed by classification symbols)
F16F9/34, F16F9/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-78004 A (Kayaba Industry Co., Ltd.),<br>29 March 2007 (29.03.2007),<br>paragraphs [0091] to [0118]; fig. 10<br>& US 2006/0283675 A1 & EP 1731792 A1<br>& KR 10-0780535 B1 & CN 1880792 A | 1<br>2-7 |
| Y | JP 2008-240764 A (Kayaba Industry Co., Ltd.),<br>09 October 2008 (09.10.2008),<br>paragraph [0018]; fig. 2<br>(Family: none) | 2,3 |
| Y | JP 2011-202800 A (Hitachi Automotive Systems, Ltd.),<br>13 October 2011 (13.10.2011),<br>paragraphs [0113] to [0119]; fig. 8<br>& US 2011/0214953 A1 & DE 102011012730 A<br>& CN 102192265 A | 4-7 |

| | | |
|---|---|---|
| ☒ Further documents are listed in the continuation of Box C. | ☐ See patent family annex. | |

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    24 September, 2013 (24.09.13) | Date of mailing of the international search report<br>    01 October, 2013 (01.10.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/071007

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-220490 A (Kayaba Industry Co., Ltd.), 04 November 2011 (04.11.2011), paragraphs [0048], [0049]; fig. 3 (Family: none) | 7 |

Form PCT/ISA/210 (continuation of second sheet) (July 2009)

**EP 2 881 614 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008215459 A
- JP 2008215460 A
- JP 2012173691 A